# EUROPEAN PATENT APPLICATION

(11) **EP 4 742 001 A1**
(43) Date of publication of application: **13.05.2026**
(21) Application number: 25738454.5
(22) Date of filing: 08.01.2025
(51) Int. Cl.: G06F 1/3234

(54) **MODE SWITCHING METHOD AND ELECTRONIC DEVICE**

(30) Priority: 10.01.2024 CN 202410041952
(71) Applicant: Huawei Technologies Co., Ltd., Shenzhen, Guangdong 518129 (CN)
(72) Inventor: WANG, Huaiyong, Shenzhen, Guangdong 518129 (CN)
(74) Representative: Thun, Clemens
(86) International application number: PCT/CN2025/071260
(87) International publication number: WO 2025/148925

(57) **Abstract**

This application provides a mode switching method and an electronic device. The mode switching method is applied to an electronic device. The electronic device includes a main processor, a coprocessor, and an internal memory. An operating mode of the electronic device includes a power saving mode and a working mode. In the power saving mode, the coprocessor works, and the main processor does not work. In the working mode, the main processor and the coprocessor work. The method includes: receiving a first operation, where the first operation is used to switch the operating mode of the electronic device from the power saving mode to the working mode; controlling the main processor to be powered on; and obtaining first data from the internal memory, where the first data is service data of the main processor stored when the operating mode of the electronic device is switched from the working mode to the power saving mode. According to this application, the operating mode of the electronic device is enabled to provide expected effect of a function, and to improve function availability, to improve user experience.

## Description

This application claims priority to Chinese Patent Application No. 202410041952.1, filed with the China National Intellectual Property Administration on January 10, 2024 and entitled "MODE SWITCHING METHOD AND ELECTRONIC DEVICE", which is incorporated herein by reference in its entirety.

### TECHNICAL FIELD

This application relates to the field of computer technologies, and in particular, to a mode switching method and an electronic device.

### BACKGROUND

Currently, a terminal device has various operating modes, for example, a working mode and a power saving mode. However, due to limited hardware computational power of the terminal device, and with continuous upgrade of a system of the terminal device and service expansion, the foregoing two operating modes cannot provide expected effect of a function for a user, and function availability is low, resulting in poor user experience.

### SUMMARY

This application discloses a mode switching method and an electronic device, to enable an operating mode of the electronic device to provide expected effect of a function, and to improve function availability, to improve user experience.

According to a first aspect, an embodiment of this application provides a mode switching method, applied to an electronic device, where the electronic device includes a main processor, a coprocessor, and an internal memory; an operating mode of the electronic device includes a power saving mode and a working mode; in the power saving mode, the coprocessor works, and the main processor does not work; in the working mode, the main processor and the coprocessor work, and the method includes: receiving a first operation, where the first operation is used to switch the operating mode of the electronic device from the power saving mode to the working mode; controlling the main processor to be powered on; and obtaining first data from the internal memory, where the first data is service data of the main processor stored when the operating mode of the electronic device is switched from the working mode to the power saving mode.

In the foregoing method, when being in the power saving mode, the electronic device may receive the first operation, control, in response to the first operation, the main processor to be powered on, and obtain the first data from the internal memory, so that the electronic device is switched to the working mode. The first data is the service data of the main processor stored when the electronic device is switched from the working mode to the power saving mode, and the first data includes service data of a multi-layer software and hardware architecture of a system. When the electronic device is switched from the power saving mode to the working mode, the electronic device may directly complete initialization of the main processor based on content and a storage location of the first data. In this way, a problem of a long operating mode switching time is resolved, a waiting time and an anxiety of a user are reduced, and user experience is improved.

In a possible implementation, after obtaining the first data from the internal memory, the method further includes: performing a first initialization procedure on the main processor based on the first data.

In the foregoing method, after obtaining the first data, the electronic device may perform the first initialization procedure on the main processor based on the first data. In this manner, the electronic device can directly complete initialization of the main processor based on the first data without obtaining related data from the external memory and sequentially loading related data at each layer in the multi-layer software architecture. It may be understood that the electronic device uses the first data to complete loading of the service data of the multi-layer software and hardware architecture at a time. In this way, an operating mode switching time is greatly reduced, a waiting time of a user is reduced, and user experience is improved.

In a possible implementation, before receiving the first operation, the method further includes: receiving a second operation, where the second operation is used to switch the operating mode of the electronic device from the working mode to the power saving mode; storing the first data in the internal memory; and controlling the main processor to be powered off.

In the foregoing method, when being in the working mode, the electronic device may receive the second operation, and store, in the internal memory in response to the second operation, current service data (namely, the foregoing first data) of the main processor in the multi-layer software and hardware architecture, control the main processor to be powered off, and maintain the internal memory not powered off, so that the electronic device is switched to the power saving mode. In this way, when the electronic device is subsequently switched back to the working mode, the first data may be directly read from the internal memory to complete initialization of the main processor, to reduce a time for the user to wait for mode switching and improve user experience.

In a possible implementation, storing the first data in the internal memory includes: obtaining the first data from a first area in the internal memory, where the first area is used for the main processor to store data; and storing the first data in a second area in the internal memory, where the second area is different from the first area.

In the foregoing method, the first area corresponds to an area in which the main processor stores data. The second area is a part of the first area. In other words, the first area includes the second area. The main processor normalizes and stores the first data in the first area in the second area of the internal memory. It may be understood that, in the working mode, the main processor stores the service data in the entire area of the internal memory, and when determining that there is currently a need to switch to the power saving mode, the service data may be stored in a part (namely, the second area) of the internal memory. In this way, storage space of the internal memory is saved, and a self-refresh area range of the internal memory is narrowed, to reduce power consumption of the electronic device, and facilitate subsequent direct obtaining of the first data from a small-range second area. This avoids selecting the first data from a large-range first area, so that a time for obtaining the first data is reduced, a time for mode switching is reduced, and user experience is improved.

In a possible implementation, a third area in the internal memory is used for the coprocessor to store data.

In the foregoing method, the internal memory further includes the third area, and the third area corresponds to an area in which the coprocessor stores data. In the working mode, both the main processor and the coprocessor may access the internal memory. For example, the main processor may access the first area of the internal memory, and the coprocessor may access the third area of the internal memory. In the power saving mode, only the coprocessor accesses the internal memory. The main processor and the coprocessor may work independently, and a working status (for example, working or not working) of the processor is switched based on a user requirement, to implement switching of the operating mode of the electronic device.

In a possible implementation, after storing the first data in the internal memory, the method further includes: sending, by the main processor, a first message to the coprocessor, where the first message includes storage location information of the first data, and the storage location information of the first data is used to determine a refresh area of the internal memory during the power saving mode.

In the foregoing method, the electronic device may set the self-refresh area of the internal memory during the power saving mode based on the storage location information of the first data, so that data in the self-refresh area of the internal memory is periodically refreshed, and an area other than the self-refresh area in the internal memory is not refreshed, to ensure integrity of the stored first data. In addition, compared with entire area refresh, partial area refresh reduces power consumption of the electronic device.

In a possible implementation, the storage location information of the first data includes location information of the second area, or location information of the first data stored in the second area.

In the foregoing method, the second area in the internal memory may be an area with a fixed address, or may be an area with a variable address. Therefore, the location information of the second area may be fixed address information, or may be variable address information. The location information of the first data stored in the second area may be address information corresponding to a part of the second area, and the part of the second area is used for storing the first data.

In a possible implementation, the first message includes size information of the first data.

In the foregoing method, the size information of the first data may be determined based on the location information of the first data stored in the second area.

In a possible implementation, after controlling the main processor to be powered off, the method further includes: adjusting an operating frequency of the internal memory to a first frequency, where the first frequency is less than a second frequency, and the second frequency is an operating frequency of the internal memory during the working mode.

In the foregoing method, in the power saving mode, the electronic device may reduce the operating frequency of the internal memory, so that the operating frequency falls within a frequency range required for the coprocessor to access the internal memory, and power consumption of the electronic device is reduced.

In a possible implementation, the method further includes: if the first data is not stored in the internal memory, performing a second initialization procedure, where duration of the second initialization procedure is greater than duration of the first initialization procedure.

In the foregoing method, when the internal memory does not store the first data, the electronic device may perform the second initialization procedure. The second initialization procedure includes, for example, obtaining related data from the external memory, and sequentially loading related data of each layer based on the multi-layer software and hardware architecture (for example, including but not limited to a kernel layer, a system library, an application framework layer, and an application layer) of the system, and completing initialization of the main processor when loading of all the data is completed. The duration (usually less than 5 seconds) of the first initialization procedure is less than the duration (usually 70 seconds) of the second initialization procedure. In this way, a problem of a long operating mode switching time is resolved, a waiting time and an anxiety of a user are reduced, and user experience is improved.

According to a second aspect, this application provides an electronic device that includes a transceiver, a processor, and a memory. The memory is configured to store a computer program, and the processor invokes the computer program to perform the mode switching method according to any one of the possible implementations of the first aspect.

According to a third aspect, this application provides an electronic device that includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the mode switching method according to any one of the possible implementations of the first aspect.

According to a fourth aspect, this application provides a computer storage medium. The computer storage medium stores a computer program, and when the computer program is executed by a processor, the mode switching method according to any one of the possible implementations of any foregoing aspect is performed.

According to a fifth aspect, this application provides a computer program product. When the computer program product is run on an electronic device, the electronic device is enabled to perform the mode switching method according to any one of the possible implementations of the first aspect.

According to a sixth aspect, this application provides an electronic device. The electronic device includes an apparatus that performs the method according to any one of the implementations of the first aspect of this application. The electronic device is, for example, a chip.

### BRIEF DESCRIPTION OF DRAWINGS

The following describes the accompanying drawings used in this application.
FIG. 1 and FIG. 2 are diagrams of some user interfaces according to this application;
FIG. 3 is a diagram of a hardware structure of an electronic device 100 according to this application;
FIG. 4 is a diagram of another hardware structure of an electronic device 100 according to this application;
FIG. 5 is a diagram of a software architecture of an electronic device 100 according to this application;
FIG. 6 is a schematic flowchart of a mode switching method according to this application;
FIG. 7 is a schematic flowchart of another mode switching method according to this application;
FIG. 8 is a diagram of two types of area distribution of an internal memory according to this application; and
FIG. 9 is a schematic flowchart of still another mode switching method according to this application.

### DESCRIPTION OF EMBODIMENTS

The following describes technical solutions of embodiments in this application with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as implying or implying relative importance or implicitly indicating a quantity of indicated technical features. Therefore, a feature limited by "first" and "second" may explicitly or implicitly include one or more of the features. In the descriptions of embodiments of this application, unless otherwise specified, "a plurality of" means two or more.

In this embodiment of this application, an electronic device may include a main processor and a coprocessor, and an operating mode of the electronic device may include a working mode and a power saving mode. In the working mode, the electronic device may normally use all functions. In the working mode, both the main processor and the coprocessor of the electronic device work/are run. Optionally, the coprocessor works in a background. In this case, power consumption of the electronic device is high. In the power saving mode, the electronic device can use only some functions, and some unnecessary functions are disabled. For example, functions such as a mobile network and a wireless local area network (wireless local area network, WLAN) are disabled. In the power saving mode, the coprocessor of the electronic device works/is run, and an application processor does not work/is not run. In this case, power consumption of the electronic device is low, and a battery life is improved.

In this embodiment of this application, an initialization procedure may be an initialization procedure performed by the main processor after the electronic device controls the main processor to be powered on. The initialization procedure may include a first initialization procedure and a second initialization procedure. The first initialization procedure is different from the second initialization procedure. For specific descriptions, refer to the following.

Currently, due to limited hardware computational power of electronic devices, and with continuous upgrade and service expansion of electronic device systems, load of an electronic device increases when an operating mode of the electronic device is switched. As a result, an operating mode switching time is long. For example, to improve a battery life of the electronic device, when the electronic device is switched from the working mode to the power saving mode, some unnecessary functions are disabled, and the main processor is controlled to be powered off, so that the main processor is in a non-working/non-running state, to reduce power consumption. Then, when the electronic device is switched from the power saving mode back to the working mode, the main processor needs to be controlled to be powered on and perform a procedure (which may be referred to as the second initialization procedure) of initializing the main processor. The second initialization procedure includes, for example, obtaining related data from an external memory, and sequentially loading related data of each layer based on a multi-layer software and hardware architecture (for example, including but is not limited to a kernel layer, a system library, an application framework layer, and an application layer) of a system. Initialization of the main processor is completed when loading of all the data is completed, and a time for performing the second initialization procedure is long (usually 70 seconds). As a result, a waiting time of a user is long, and availability of a mode switching function is low, affecting user experience.

The following describes, by using an example in which an operating mode of an electronic device is manually switched, an application scenario in embodiments of this application and a diagram of a user interface in the scenario.

Scenario 1: An operating mode of an electronic device 100 is switched from a working mode to a power saving mode.

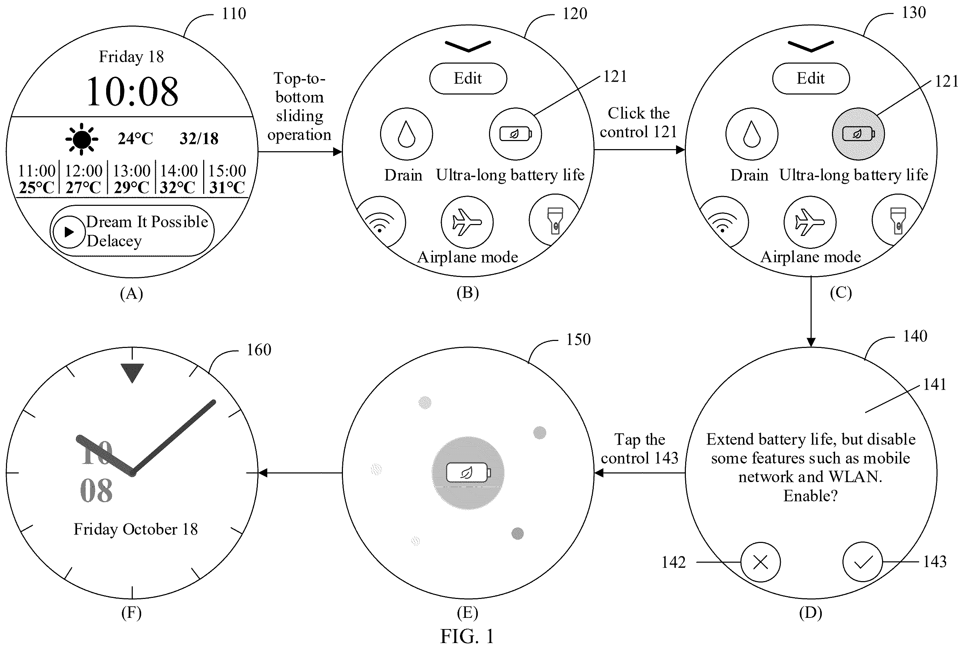

As shown in (A) in FIG. 1, the electronic device 100 may display a user interface 110. The user interface 110 is a watch face of the electronic device 100 in the working mode. The user interface 110 may include components such as time, weather, and a player. In this case, both a main processor and a coprocessor of the electronic device 100 work. In an implementation, the electronic device 100 may display a shortcut setting interface in response to a user operation on the user interface 110 (for example, the user operation is a sliding operation from the top of the watch face to the bottom). For a specific example, refer to a user interface 120 shown in (B) in FIG. 1.

As shown in (B) in FIG. 1, the user interface 120 may include a plurality of function controls, for example, controls of functions such as edit, drain, an ultra-long battery life, and an airplane mode. Characters "ultra-long battery life" are displayed below a control 121 of the ultra-long battery life function. The control 121 may be used to enable the ultra-long battery life function of the electronic device 100, that is, enable/switch to the power saving mode of the electronic device 100. In an implementation, the electronic device 100 may display, in response to a user operation (for example, the user operation is a touch operation) on the control 121, a user interface 130 shown in (C) in FIG. 1, and choose to enable the power saving mode indicated by the control 121. In this case, the electronic device 100 may display a user interface 140 shown in (D) in FIG. 1.

As shown in (C) in FIG. 1, the user interface 130 is similar to the user interface 120 shown in (B) in FIG. 1, and a difference lies in that the control 121 in the user interface 130 is in a selected state, which may represent that switching to the power saving mode is triggered.

As shown in (D) in FIG. 1, the user interface 140 may include text content 141, a control 142, and a control 143. The text content 141 may include characters "Extend battery life, but disable some features such as mobile network and WLAN. Enable?" The control 142 may be used to cancel enabling of the power saving mode of the electronic device 100, and the control 143 may be used to determine to enable the power saving mode of the electronic device 100. In an implementation, the electronic device 100 may display, in response to a user operation (for example, the user operation is a touch operation) on the control 143, a user interface 150 shown in (E) in FIG. 1. The electronic device 100 may control the main processor to be powered off, so that the electronic device 100 is switched to the power saving mode. In this case, the electronic device 100 may display a user interface 160 shown in (F) in FIG. 1.

As shown in (E) in FIG. 1, the user interface 150 may be a loading interface, and represents that the electronic device 100 is currently switching to the power saving mode. As shown in (F) in FIG. 1, the user interface 160 may be a watch face of the electronic device 100 in the power saving mode.

This is not limited thereto. In another implementation, the electronic device 100 may cancel enabling of the power saving mode of the electronic device 100 in response to a user operation (for example, the user operation is a touch operation) on the control 142 in the user interface 140 shown in (D) in FIG. 1. In this case, the electronic device 100 may display the user interface 120 shown in (B) in FIG. 1.

Scenario 2: After (A) in FIG. 1 to (F) in FIG. 1 shown in the scenario 1, the operating mode of the electronic device 100 may be switched from the power saving mode back to the working mode.

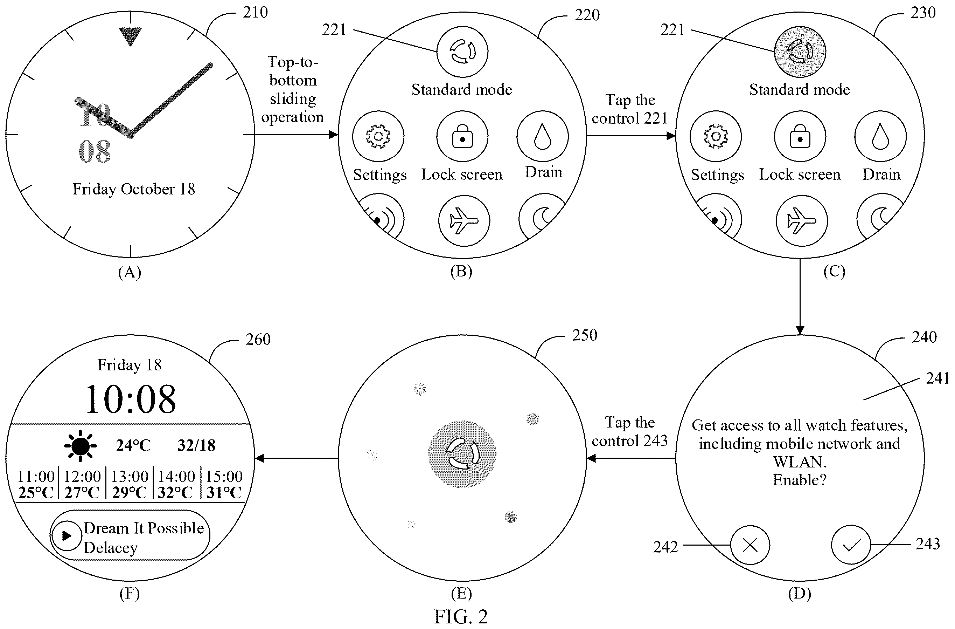

As shown in (A) in FIG. 2, the electronic device 100 may display a user interface 210, and the user interface 210 is the watch face of the electronic device 100 in the power saving mode. In this case, the coprocessor of the electronic device 100 works, but the main processor does not work. In an implementation, the electronic device 100 may display a shortcut setting interface in response to a user operation on the user interface 210 (for example, the user operation is a sliding operation from the top of the watch face to the bottom). For a specific example, refer to a user interface 220 shown in (B) in FIG. 2.

As shown in (B) in FIG. 2, the user interface 220 may include a plurality of function controls, for example, controls of functions such as a standard mode, setting, lock screen, and drain. Characters "Standard mode" are displayed below a control 221 of the standard mode function, and the control 221 may be used to enable/switch to the standard mode, namely, the working mode, of the electronic device 100. In an implementation, the electronic device 100 may display, in response to a user operation (for example, the user operation is a touch operation) on the control 221, a user interface 230 shown in (C) in FIG. 2, and choose to enable the working mode indicated by the control 221. In this case, the electronic device 100 may display a user interface 240 shown in (D) in FIG. 2.

As shown in (C) in FIG. 2, the user interface 230 is similar to the user interface 220 shown in (B) in FIG. 2, and a difference lies in that the control 221 in the user interface 230 is in a selected state, which may represent that switching to the working mode is triggered.

As shown in (C) in FIG. 2, the user interface 240 may include text content 241, a control 242, and a control 243. The text content 241 may include characters "Get access to all watch features, including mobile network and WLAN. Enable?" The control 242 may be used to cancel enabling of the working mode of the electronic device 100, and the control 243 may be used to determine to enable the working mode of the electronic device 100. In an implementation, the electronic device 100 may display, in response to a user operation (for example, the user operation is a touch operation) on the control 243, a user interface 250 shown in (E) in FIG. 2. The electronic device 100 may control the main processor to be powered on, and perform the second initialization procedure, so that the electronic device 100 is switched to the working mode. In this case, the electronic device 100 may display a user interface 260 shown in (F) in FIG. 2.

As shown in (E) in FIG. 2, the user interface 250 may be a loading interface, and represents that the electronic device 100 is currently switching to the working mode. As shown in (F) in FIG. 2, the user interface 260 may be the watch face of the electronic device 100 in the power saving mode, and the user interface 260 may include components such as time, weather, and a player.

This is not limited thereto. In another implementation, the electronic device 100 may cancel enabling of the working mode of the electronic device 100 in response to a user operation (for example, the user operation is a touch operation) on the control 242 in the user interface 240 shown in (D) in FIG. 2. In this case, the electronic device 100 may maintain the main processor powered off, and does not perform the second initialization procedure. The electronic device 100 may display the user interface 220 shown in (B) in FIG. 2.

In the foregoing scenario 2, when the operating mode of the electronic device is switched from the power saving mode back to the working mode, the electronic device 100 displays the loading interface (namely, the user interface 250) for a long time. It may be understood that the electronic device 100 takes a long time to switch from the power saving mode to the working mode, and a user needs to wait for a long time, resulting in poor user experience.

An embodiment of this application provides a mode switching method, applied to an electronic device. The electronic device includes a main processor, a coprocessor, and an internal memory. When the electronic device is in a power saving mode, the electronic device may receive a first operation. The first operation may be used to switch an operating mode from the power saving mode to a working mode. The first operation is, for example, the user operation on the control 243 in the user interface 240 in the foregoing scenario 2. In response to the first operation, the electronic device may control the main processor to be powered on and obtain first data from the internal memory, and the electronic device may perform a first initialization procedure (that is, load the first data and initialize the main processor) based on the first data, so that the electronic device is switched to the working mode. The first data may be service data (including data of a running service, a cached process, and the like) of the main processor stored when the electronic device is switched from the working mode to the power saving mode, and the first data may include service data of a multi-layer software and hardware architecture of a system. When the electronic device is switched from the power saving mode to the working mode, the electronic device may directly complete initialization of the main processor based on content and a storage location of the first data without obtaining related data from an external memory and sequentially loading the related data of each layer in the multi-layer software and hardware architecture, which may be understood as that the electronic device uses the first data to complete loading of the service data of the multi-layer software and hardware architecture at a time. Duration (usually less than 5 seconds) of the first initialization procedure is less than duration (usually 70 seconds) of a second initialization procedure. In this way, a problem of a relatively long time required for operating mode switching is resolved, a waiting time and an anxiety of a user are reduced, and user experience is improved.

In addition, before that, when the electronic device is in the working mode, the electronic device may receive a second operation, and the second operation is used to switch the operating mode from the working mode to the power saving mode. The second operation is, for example, the user operation on the control 143 in the user interface 140 in the foregoing scenario 1. In response to the second operation, the electronic device may first store current service data (including data of a running service, a cached process, and the like) of the main processor in the multi-layer software and hardware architecture to the internal memory, control the main processor to be powered off, and maintain the internal memory not powered off, so that the electronic device is switched to the power saving mode. In addition, in the power saving mode, the electronic device may reduce an operating frequency of the internal memory, so that the operating frequency falls within a frequency range required for the coprocessor to access the internal memory, and power consumption of the electronic device is reduced. In addition, the electronic device may set a self-refresh area (for example, a part of the internal memory) of the internal memory, so that data (for example, service data) in the self-refresh area of the internal memory is periodically refreshed, and an area other than the self-refresh area in the internal memory is not refreshed, to ensure integrity of the stored service data of the main processor. In addition, compared with entire area refresh, partial area refresh further reduces power consumption of the electronic device.

In embodiments of this application, the electronic device may be a smart home device like a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), or a smart television, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, a smart city device, or the like. A specific type of the electronic device is not specifically limited in this application.

In embodiments of this application, the wearable device may also be referred to as a wearable intelligent device, an intelligent wearable device, or the like, and is a general term of wearable devices that are intelligently designed and developed for daily wear using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The following describes a structure of an example electronic device provided in embodiments of this application.

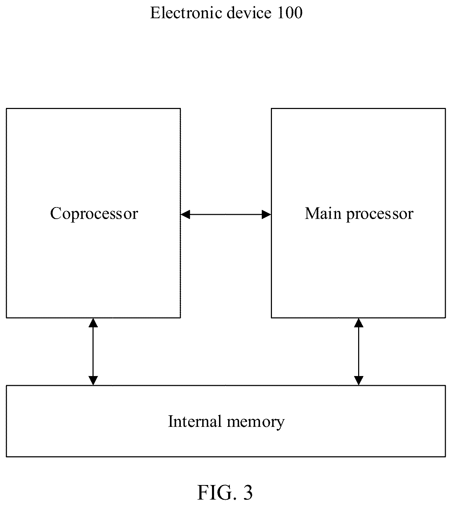

FIG. 3 is an example of a diagram of a hardware structure of the electronic device 100.

As shown in FIG. 3, the electronic device 100 may include a coprocessor, a main processor, and an internal memory. The coprocessor may communicate with the main processor in a wired (for example, a universal serial bus (universal serial bus, USB), twisted pair, coaxial cable, and optical fiber) and/or wireless (for example, a wireless local area network (wireless local area network, WLAN), Bluetooth, and a cellular communication network) manner. The main processor may communicate with the internal memory in a wired and/or wireless manner, and the coprocessor may communicate with the internal memory in a wired and/or wireless manner. It may be understood that the main processor and the coprocessor share one internal memory, and both the main processor and the coprocessor can access the internal memory.

The main processor may include but is not limited to an application processor (application processor, AP) and a central processing unit (Central Processing Unit, CPU). The coprocessor may include but is not limited to a graphics processing unit (graphics processing unit, GPU), an image signal processor (image signal processor, ISP), a modem processor, a graphics processing unit (graphics processing unit, GPU), an image signal processor (image signal processor, ISP), a controller, a video codec, a digital signal processor (digital signal processor, DSP), a baseband processor, a neural-network processor (neural-network processing unit, NPU), and/or the like.

The internal memory may be configured to store data of the main processor and the coprocessor, for example, service data such as a running service and a cached process. The internal memory may include but is not limited to a high-speed random access memory, for example, a double data rate (Double Data Rate, DDR) synchronous dynamic random access memory.

The main processor has strong computational power but high power consumption. When the main processor accesses the internal memory, an operating frequency of the internal memory needs to be maintained in a high range, for example, greater than or equal to 200 megahertz (MHz) (for example, 200 MHz, 400 MHz, 800 MHz, or 1200 MHz). The coprocessor has weak computational power but low power consumption. When the coprocessor accesses the internal memory, an operating frequency of the internal memory needs to be maintained in a low range, for example, less than or equal to 192 MHz (for example, 32 MHz, 48 MHz, 96 MHz, or 192 MHz).

It may be understood that, when the electronic device 100 is in a working mode, both the application processor and the coprocessor work (optionally, the coprocessor works in a background), and a frequency of the internal memory needs to be maintained in a high frequency range, to support normal working of the application processor. When the electronic device 100 is in a power saving mode, the application processor does not work, and only the coprocessor works. In this case, the coprocessor may adjust the frequency of the internal memory to be in a low frequency range to support normal working of the coprocessor, to reduce power consumption.

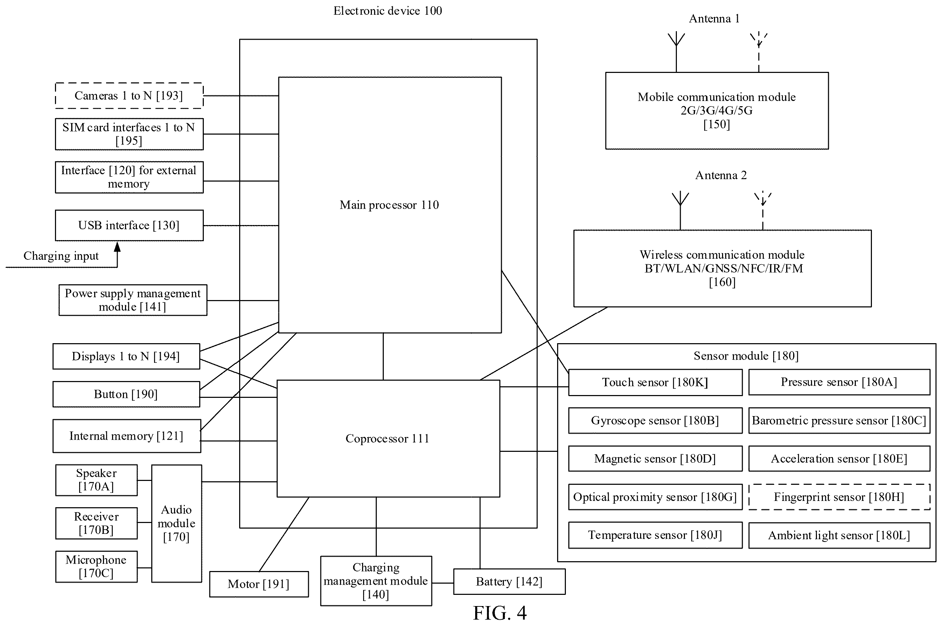

FIG. 4 is an example of a diagram of another hardware structure of the electronic device 100.

As shown in FIG. 4, the electronic device 100 may include a main processor 110, a coprocessor 111, an interface 120 for external memory, an internal memory 121, a universal serial bus (universal serial bus, USB) interface 130, a charging management module 140, a power supply management module 141, a battery 142, an antenna 1, an antenna 2, a mobile communication module 150, a wireless communication module 160, an audio module 170, a speaker 170A, a receiver 170B, a microphone 170C, a sensor module 180, a button 190, a motor 191, a display 194, optionally a camera 193, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, an optical proximity sensor 180G, a temperature sensor 180J, a touch sensor 180K, an ambient light sensor 180L, optionally, a fingerprint sensor 180H, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. For example, the electronic device 100 may not include the camera 193, the sensor module 180 may not include the fingerprint sensor 180H, and the like. The components shown in the figure may be implemented by hardware, software, or a combination of software and hardware.

The main processor 110 may include but is not limited to an application processor (application processor, AP) and a central processing unit (Central Processing Unit, CPU). The coprocessor 111 may include but is not limited to a graphics processing unit (graphics processing unit, GPU), an image signal processor (image signal processor, ISP), a modem processor, a graphics processing unit (graphics processing unit, GPU), an image signal processor (image signal processor, ISP), a controller, a video codec, a digital signal processor (digital signal processor, DSP), a baseband processor, a neural-network processor (neural-network processing unit, NPU), and/or the like. Different processing units may be independent components, or may be integrated into one or more processors.

A memory may be further disposed in the main processor 110, and is configured to store instructions and data. In an implementation, the memory in the main processor 110 is a cache. The memory may store instructions or data just used or cyclically used by the main processor 110. If the main processor 110 needs to use the instructions or the data again, the main processor may directly invoke the instructions or the data from the memory. This avoids repeated access and reduces waiting time of the main processor 110, so that system efficiency is improved.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power supply management module 141.

The power supply management module 141 is configured to connect to the battery 142, the charging management module 140, and the main processor 110. The charging management module 140 and the battery 142 may be connected to the coprocessor 111.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In another implementation, the antenna may be used in combination with a tuning switch.

The mobile communication module 150 may provide a wireless communication solution that is applied to the electronic device 100 and that includes a second generation (second generation, 2G) mobile communication technology/a third generation (third generation, 3G) mobile communication technology/a fourth generation (fourth generation, 4G) mobile communication technology/a fifth generation (fifth generation, 5G) mobile communication technology/a sixth generation (sixth generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In an implementation, the modem processor may be an independent component. In another implementation, the modem processor may be independent of the coprocessor 111, and is disposed in a same component as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the coprocessor 111. The wireless communication module 160 may further receive a to-be-sent signal from the coprocessor 111, perform frequency modulation and amplification on the signal, and convert the signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The coprocessor 111 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In an implementation, the electronic device 100 may include one or N displays 194, where N is a positive integer greater than 1.

The interface 120 for external memory may be used to connect to an external memory card, for example, a micro SD card, to extend a storage capability of the electronic device 100. The external memory card communicates with the main processor 110 through the interface 120 for external memory, to implement a data storage function.

The internal memory 121 is connected to the main processor 110 and the coprocessor 111, and may be configured to store computer executable program code, and the executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The main processor 110 and the coprocessor 111 run the instructions stored in the internal memory 121, to perform various function applications of the electronic device 100 and data processing.

The electronic device 100 may implement an audio function through the audio module 170, the speaker 170A, the receiver 170B, the microphone 170C, and the application processor.

The audio module 170 is configured to convert digital audio information into an analog audio signal for output, and is also configured to convert an analog audio input into a digital audio signal. The audio module 170 may be further configured to code and decode an audio signal. In an implementation, the audio module 170 may be disposed in the coprocessor 111, or some functional modules in the audio module 170 are disposed in the coprocessor 111.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The pressure sensor 180A is configured to sense a pressure signal, and can convert the pressure signal into an electrical signal. In an implementation, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touch location based on a detection signal of the pressure sensor 180A. In an implementation, touch operations that are performed at a same touch position but have different touch operation intensity may correspond to different operation instructions.

The gyroscope sensor 180B may be configured to determine a moving posture of the electronic device 100. In an implementation, an angular velocity of the electronic device 100 around three axes (namely, axes x, y, and z) may be determined through the gyroscope sensor 180B.

The barometric pressure sensor 180C is configured to measure barometric pressure. In an implementation, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100.

The optical proximity sensor 180G may include, for example, a light emitting diode (LED) and an optical detector, for example, a photodiode. The light emitting diode may be an infrared light emitting diode. The electronic device 100 emits infrared light through the light emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. In an implementation, in the working mode, the touch sensor may transfer the detected touch operation to the application processor, to determine a type of the touch event. In another implementation, in the power saving mode, the touch sensor may transfer the detected touch operation to the coprocessor 111, to determine a type of the touch event. A visual output related to the touch operation may be provided through the display 194. In some other embodiments, the touch sensor 180K may also be disposed on a surface of the electronic device 100 at a position different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. The motor 191 may also correspond to different vibration feedback effects for touch operations performed on different areas of the display 194. Different application scenarios (for example, a time reminder, information receiving, and an alarm clock) may also correspond to different vibration feedback effects. A touch vibration feedback effect may be further customized.

The SIM card interface 195 is configured to connect to a SIM card.

A software system of the electronic device 100 may use a layered architecture, an event-driven architecture, a microkernel architecture, a microservice architecture, or a cloud architecture. For example, a software system with the layered architecture may be an Android (Android) system, or may be a Harmony (harmony) operating system (operating system, OS), or another software system. In embodiments of this application, an Android system with a layered architecture is used as an example to describe a software structure of the electronic device 100.

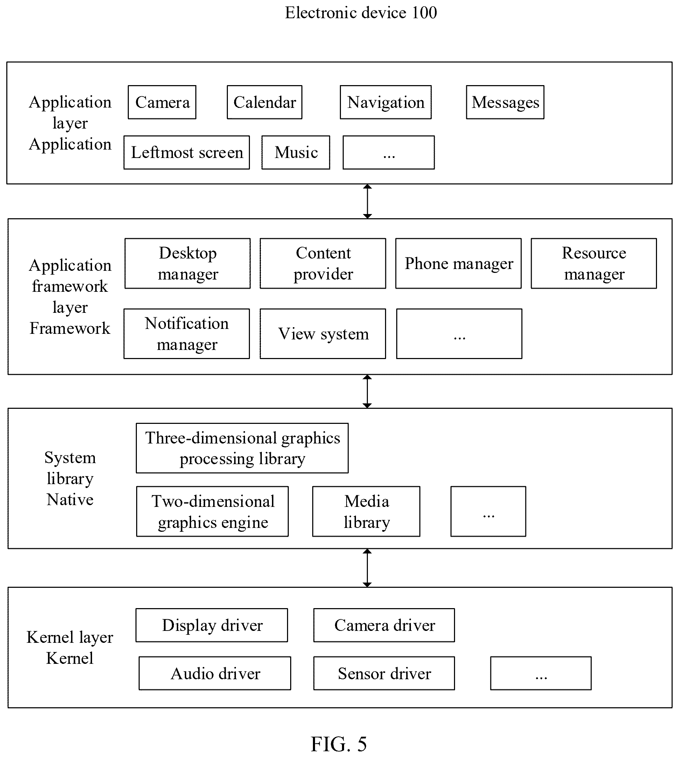

FIG. 5 is an example of a diagram of a software architecture of an electronic device 100.

In a layered architecture, software is divided into several layers, and each layer has a clear role and task. The layers communicate with each other through a software interface. In an implementation, an Android system is divided into four layers: an application layer (Application), an application framework layer (Framework), a system library (Native), and a kernel layer (Kernel) from top to bottom.

The application layer may include a series of application packages.

As shown in FIG. 5, the application package may include applications such as Camera, Music, Calendar, Messages, Navigation, and Leftmost screen.

The application framework layer provides an application programming interface (application programming interface, API) and a programming framework for an application at the application layer. The application framework layer includes some predefined functions.

As shown in FIG. 5, the application framework layer may include a desktop manager, a content provider, a view system, a phone manager, a resource manager, a notification manager, and the like.

The desktop manager is configured to manage desktop programs. The desktop manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify a message notification. The notification manager may alternatively be a notification that appears on the screen in a form of a dialog window. For example, text information is prompted in the status bar, an alert tone is made, the electronic device vibrates, or the indicator blinks.

The system library may include a plurality of functional modules, for example, a media library (Media Library), a three-dimensional graphics processing library (for example, OpenGL ES), and a 2D graphics engine (for example, SGL).

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a mode switching scenario.

When the electronic device 100 is in a working mode, when the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation, and a control corresponding to the single-tap operation is an icon control of a power saving mode. An application is set to invoke an interface of the application framework layer, to invoke the kernel layer to control the display driver, and to display, through the display 194, a loading interface for enabling the power saving mode. The loading interface is, for example, the user interface 150 shown in (E) in FIG. 1.

The following describes a mode switching method provided in an embodiment of this application.

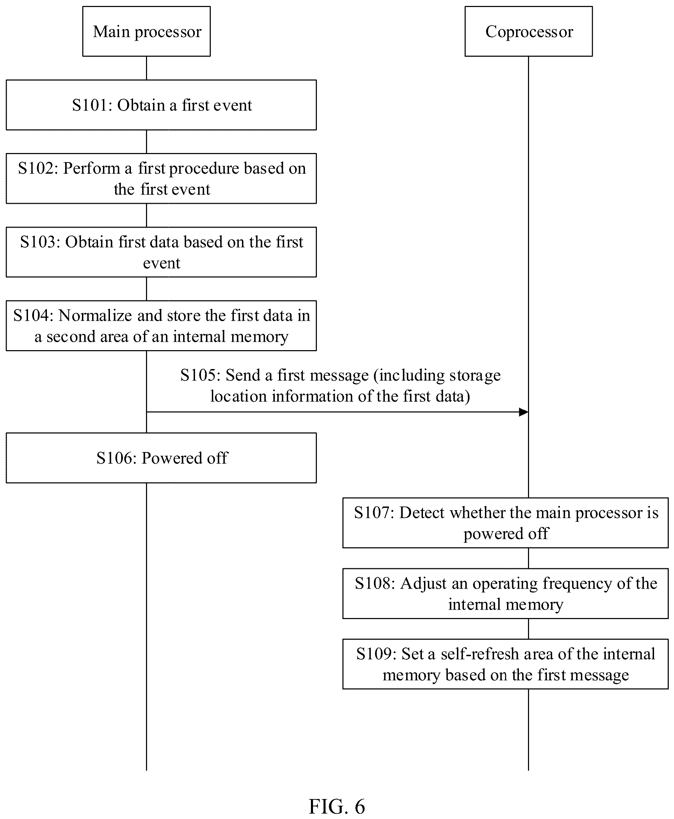

FIG. 6 is a schematic flowchart of a mode switching method according to an embodiment of this application. The method may be applied to the mode switching scenario shown in FIG. 1. The method may be applied to the electronic device 100 shown in FIG. 3. The method may be applied to the electronic device 100 shown in FIG. 4. The method may be applied to the electronic device 100 shown in FIG. 5. The method may include but is not limited to the following steps.

S101: A main processor obtains a first event.

In an implementation, a current operating mode of an electronic device 100 is a working mode, both the main processor and a coprocessor in the electronic device 100 work, and optionally, the coprocessor works in a background. In an implementation, when the operating mode of the electronic device 100 is the working mode, an operating frequency of an internal memory is a frequency 1, and the frequency 1 is, for example, greater than or equal to 200 MHz (for example, 200 MHz, 400 MHz, 800 MHz, or 1200 MHz). In some examples, when the operating mode of the electronic device 100 is the working mode, the user interface 110 shown in (A) of FIG. 1 may be displayed.

In an implementation, the electronic device 100 may receive a first user operation, and obtain the first event based on the first user operation. The first user operation may be used to switch the operating mode from the working mode to a power saving mode. The first user operation is, for example, the touch operation on the control 143 in the user interface 140 in the scenario 1 shown in FIG. 1.

In an implementation, the first event may be an event for switching the operating mode of the electronic device 100 from the working mode to the power saving mode. In some examples, generation of the first event may be triggered by a user. For example, the first event includes the first user operation. When the electronic device 100 is in the working mode, a touch sensor may receive the first user operation, a corresponding hardware interrupt may be sent to a kernel layer of the main processor, and the main processor may process the first user operation into the first event. In some other examples, generation of the first event may be triggered by the electronic device 100 itself. For example, the first event includes detecting a battery level of the electronic device 100. When the electronic device 100 is in the working mode, and detects that a current remaining battery level is less than a first battery level threshold, the first event may be generated.

S102: The main processor performs a first procedure based on the first event.

In an implementation, the first procedure may include disabling a service that is already opened and/or being cached. After obtaining the first event, the main processor may determine that there is currently a need to switch to the power saving mode, and the main processor may disable a running service/business on the electronic device 100, a cached process, and the like, to implement subsequently power-off the main processor.

S103: The main processor obtains first data based on the first event.

In an implementation, the first data may be service data of the main processor. The service data includes, for example, but is not limited to, data such as the running service and the cached process of the electronic device 100. The first data may include service data of a multi-layer software and hardware architecture of a system.

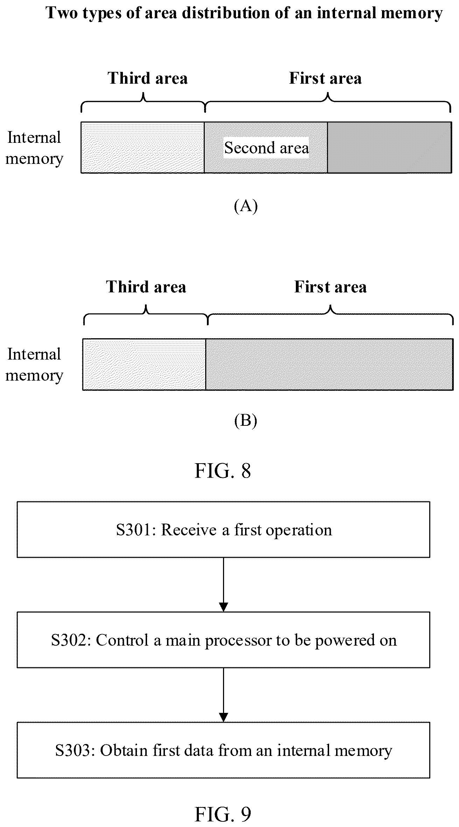

In an implementation, the internal memory may be divided into a plurality of areas. The plurality of areas include, for example, a first area and a third area. Different areas may be used by different types of processors to store data. The first area may be used by the main processor to store data (for example, the first data), and the third area may be used by the coprocessor to store data. In other words, the first area may correspond to an area in which the main processor stores data, and the third area may correspond to an area in which the coprocessor stores data. In some examples, for an area distribution diagram of the internal memory, refer to FIG. 8. Details are not described herein.

In an implementation, after obtaining the first event, the main processor may determine that there is currently a need to switch to the power saving mode, and obtain the first data from the first area in the internal memory.

A sequence of S102 and S103 is not limited.

S104: The main processor normalizes and stores the first data in a second area of the internal memory.

In an implementation, the second area may be a part of the first area. In other words, the first area includes the second area.

In an implementation, the second area may be an area with a fixed address in the first area. In some examples, it is assumed that a start address corresponding to the first area is 1, and an end address corresponding to the first area is 100. In other words, an address range corresponding to the first area is [1, 100]. The second area is, for example, an area corresponding to an address range of [1, 10] in the first area. It may be understood that when the main processor determines that there is currently a need to switch to the power saving mode, the main processor may store the service data of the main processor in [1, 10] each time.

In another implementation, the second area may be an area with a variable address in the first area. In some examples, it is assumed that the address range corresponding to the first area is still [1, 100], and the second area is, for example, an area corresponding to an address range of [a, b] in the first area, where a is less than b, a is greater than or equal to 1, b is less than or equal to 100, and b is not equal to 100 when a is equal to 1. It may be understood that when the main processor determines, at a first moment, that there is currently a need to switch to the power saving mode, the service data of the main processor may be stored in [a1, b1], and when the main processor determines, at a second moment (the second moment is different from the first moment), that there is currently a need to switch to the power saving mode again, the service data of the main processor may be stored in [a2, b2], where a1 is not equal to a2, and/or b1 is not equal to b2. For details about values of [a1, b1] and [a2, b2], refer to descriptions of values of [a, b].

In an implementation, the main processor may normalize and store the first data in the first area into the second area of the internal memory. It may be understood that, in the working mode, the main processor stores the service data in an entire area of the internal memory, and when obtaining the first event (used to switch to the power saving mode), the main processor may store the service data in a part (namely, the second area) of the internal memory.

In an implementation, after storing the first data in the second area, the main processor may determine location information of the second area and size information of the first data. The location information of the second area may include a start address and an end address (namely, an address range) corresponding to the second area, and the size information of the first data may be determined based on a specific location of the first data stored in the second area. In some examples, it is assumed that the address range of the second area is [1, 10]. In this case, the location information of the second area may include the address range [1, 10]. It is assumed that the specific location of the first data stored in [1, 10] is [1, 2]. In this case, the main processor may determine the size information of the first data based on [1, 2].

S105: The main processor sends a first message (including storage location information of the first data) to the coprocessor.

In an implementation, the first message may include the storage location information of the first data. The storage location information of the first data may include the location information of the second area or the specific location information of the first data stored in the second area. The location information of the second area may be fixed address information, or may be variable address information. The specific location information of the first data stored in the second area may be address information corresponding to a part of the second area. For specific descriptions, refer to the descriptions in S104. Details are not described herein again.

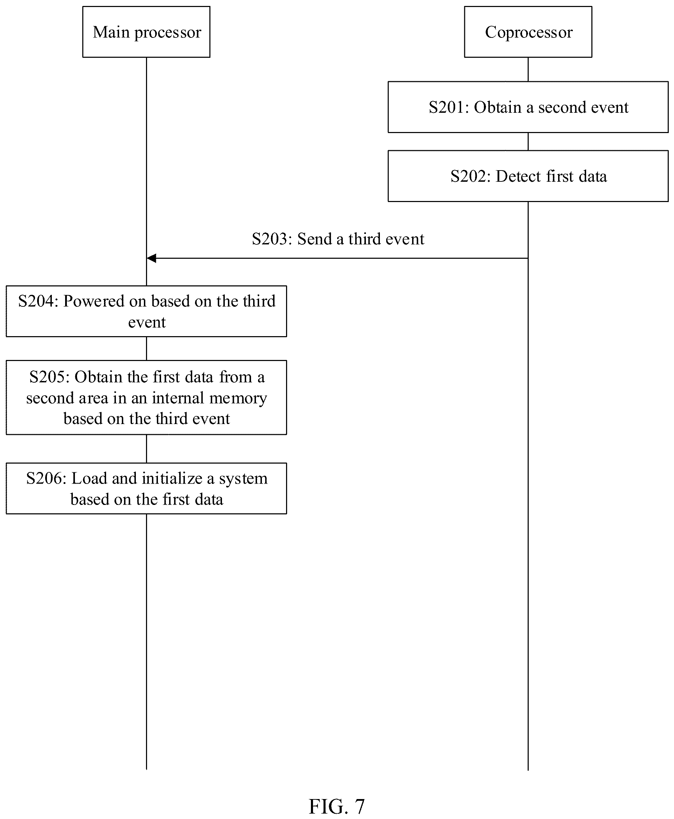

In an implementation, after receiving the first message, the coprocessor may mark and store a first flag bit. The first flag bit may indicate the main processor to store the first data in the internal memory (for example, the storage location of the first data), and is used for the coprocessor to detect the first data and send a third event to the main processor when switching back to the working mode is subsequently triggered. For specific description, refer to S202 and S203 in FIG. 7. Details are not described herein.

S106: The main processor is powered off.

In an implementation, the electronic device 100 may control the main processor, an external device, and a system-on-chip (System-on-Chip, SOC) to be powered off, and maintain the internal memory not powered off, so that the operating mode of the electronic device 100 is switched from the working mode to the power saving mode.

S107: The coprocessor detects whether the main processor is powered off.

In an implementation, after receiving the first message, the coprocessor may detect whether the main processor is powered off.

A sequence of S106 and S107 is not limited.

S108: The coprocessor adjusts the operating frequency of the internal memory.

In an implementation, S108 is an optional step.

In an implementation, after detecting that the main processor is powered off, the coprocessor may determine that a current operating mode of the electronic device 100 is the power saving mode, the main processor in the electronic device 100 does not work, and only the coprocessor works. In this case, the electronic device 100 may display the user interface 160 shown in (F) in FIG. 1.

In an implementation, the coprocessor may adjust the operating frequency (for example, a clock frequency) of the internal memory to a frequency 2, where the frequency 2 is less than the frequency 1, and the frequency 2 is, for example, less than or equal to 192 MHz (for example, 32 MHz, 48 MHz, 96 MHz or 192 MHz). The frequency 2 that is adjusted to can fall within a frequency range required for the coprocessor to access the internal memory, and power consumption of the electronic device 100 is reduced.

S109: The coprocessor sets a self-refresh area of the internal memory based on the first message.

In an implementation, S109 is an optional step.

In an implementation, the self-refresh area may be a part of the internal memory, and the self-refresh area may be related to the second area. For example, the self-refresh area may be the second area or a part (for example, an area in which the first data is stored) of the second area.

In an implementation, the coprocessor may set the self-refresh area of the internal memory during the power saving mode based on the received first message, so that data (for example, the foregoing first data) in the self-refresh area of the internal memory is periodically refreshed. In some examples, it is assumed that the storage location information of the first data includes the location information of the second area, and the address range of the second area is, for example, [1, 10]. The coprocessor may set the second area in which the first data is stored as the self-refresh area. In other words, the self-refresh area is [1, 10]. The internal memory may periodically refresh (for example, refresh every 10 seconds) the first data stored in [1, 10], to ensure integrity of the stored service data (namely, the first data) of the main processor. In addition, an area other than the self-refresh area in the internal memory is not refreshed. In other words, a part of the internal memory instead of the entire internal memory is refreshed, to further reduce power consumption of the electronic device.

In an implementation, the electronic device 100 may perform only S108, or perform only S109, or perform S108 and S109. When the electronic device 100 performs only S108, the electronic device 100 may no longer set the self-refresh area of the internal memory. In this case, the internal memory may periodically refresh the entire area, and power consumption is increased. When the electronic device 100 performs only S109, the electronic device 100 may no longer reduce the operating frequency of the internal memory, but maintain the operating frequency of the internal memory at the frequency 1. Correspondingly, power consumption is increased during a partial self-refresh of the internal memory.

Apart from the case in which the main processor normalizes and stores the first data in the second area of the internal memory shown in FIG. 6, in another implementation, after obtaining the first data, the main processor may directly store the first data in the first area of the internal memory, instead of the second area in the first area. The process in which the main processor performs normalization and storage is not required according to the manner, and the manner is applicable to a main processor with average/poor computational power, so that an application scenario of mode switching is expanded and user experience is improved.

In the method shown in FIG. 6, when the electronic device is in the working mode, the electronic device may receive the first user operation, and the first user operation is used to switch the operating mode from the working mode to the power saving mode. In response to the first user operation, the electronic device may first store current service data (namely, the first data) of the main processor in the multi-layer software and hardware architecture to the internal memory, control the main processor to be powered off, and maintain the internal memory not powered off, so that the electronic device is switched to the power saving mode. In addition, in the power saving mode, the electronic device may reduce the operating frequency of the internal memory, so that the operating frequency falls within the frequency range required for the coprocessor to access the internal memory, and power consumption of the electronic device is reduced. In addition, the electronic device may set the self-refresh area of the internal memory, so that the first data in the self-refresh area of the internal memory is periodically refreshed, and an area other than the self-refresh area in the internal memory is not refreshed, to ensure integrity of the stored first data of the main processor. In addition, compared with entire area refresh, partial area refresh further reduces power consumption of the electronic device.

FIG. 7 is a schematic flowchart of another mode switching method according to an embodiment of this application. The method may be applied to the mode switching scenario shown in FIG. 2. The method may be applied to the electronic device 100 shown in FIG. 3. The method may be applied to the electronic device 100 shown in FIG. 4. The method may be applied to the electronic device 100 shown in FIG. 5. The method may include but is not limited to the following steps.

S201: A coprocessor obtains a second event.

In an implementation, before S201, the method may further include S101 to S109 in FIG. 6.

In an implementation, a current operating mode of an electronic device 100 is a power saving mode, a main processor in the electronic device 100 does not work, and only the coprocessor works. In an implementation, when the operating mode of the electronic device 100 is the power saving mode, an operating frequency of an internal memory is a frequency 2. In some examples, when the operating mode of the electronic device 100 is the power saving mode, the user interface 210 shown in (A) in FIG. 2 may be displayed.

In an implementation, the electronic device 100 may receive a second user operation, and obtain the second event based on the second user operation. The second user operation may be used to switch the operating mode from the power saving mode to a working mode, and the second user operation is, for example, the touch operation on the control 243 in the user interface 240 in the scenario 2 shown in FIG. 2.

In an implementation, the second event may be an event for switching the operating mode of the electronic device 100 from the power saving mode to the working mode. In some examples, generation of the second event may be triggered by a user. For example, the second event includes the second user operation. When the electronic device 100 is in the power saving mode, a touch sensor may receive the second user operation, a corresponding hardware terminal may be sent to a kernel layer of the coprocessor, and the coprocessor may process the second user operation into the second event. In some other examples, generation of the second event may be triggered by the electronic device 100 itself. For example, the second event includes detecting a battery level of the electronic device 100. When the electronic device 100 is in the power saving mode, and detects that a current remaining battery level is greater than a second battery level threshold, the second event may be generated. For another example, the second event includes detecting an incoming call notification of the electronic device 100. When the electronic device 100 detects an incoming call notification, the second event may be generated.

S202: The coprocessor detects first data.

In an implementation, after obtaining the second event, the coprocessor may determine that there is currently a need to switch to the working mode. The coprocessor determines that a first flag bit is currently stored, and may detect the first data based on storage location information of the first data, for example, detect, based on a storage location of the first data, the first data corresponding to the storage location in the internal memory. For description of the first flag bit, refer to the descriptions in S105 in FIG. 6.

In an implementation, after obtaining the second event, the coprocessor may detect first data after a latest/last self-refresh of the internal memory, for example, check integrity of the first data. It may be understood that, in the power saving mode, the internal memory stores service data of the main processor (namely, the first data), and continuously performs self-refresh. Therefore, checking the integrity of the first data by obtaining latest refreshed service data in the internal memory ensures higher accuracy and better aligns with an actual condition.

In some examples, if a first difference between a moment of a last self-refresh of the internal memory and a current moment at which the second event is obtained is less than or equal to a first threshold, the coprocessor may directly detect the first data based on the flag bit of the first data. If the first difference is greater than or equal to a second threshold, the coprocessor may detect the first data based on the flag bit of the first data after another self-refresh. For example, it is assumed that a cycle of data self-refresh of the internal memory is 10 seconds, and an interval between the moment at which the coprocessor obtains the second event and the moment of the last self-refresh is 1 second (it is assumed that the interval is less than the first threshold), which may be understood as that the coprocessor obtains the second event 1 second after data self-refresh of the internal memory. In this case, the coprocessor may directly detect the current first data. For another example, it is assumed that an interval between the moment at which the coprocessor obtains the second event and the moment of the last self-refresh is 9 seconds (it is assumed that the interval is greater than the second threshold), which may be understood as that, the coprocessor obtains the second event 9 seconds after the data self-refresh of the internal memory. In this case, the coprocessor may wait for 1 second for another self-refresh, and detect first data after the another self-refresh.

S203: The coprocessor sends a third event to the main processor.

In an implementation, when the coprocessor detects that the first data is complete, the coprocessor may send the third event to the main processor, and the third event may be used for power-on of the main processor, which may be understood as that the coprocessor wakes up the main processor.

S204: The main processor is powered on based on the third event.

In an implementation, after receiving the third event, the main processor may be powered on, to perform a first initialization procedure (namely, S205 and S206). The electronic device 100 may further control an external device and a chip SOC to be powered on, and the internal memory remains not powered off.

In an implementation, after the main processor is powered on, the internal memory may be initialized, and the operating frequency of the internal memory is adjusted to a frequency 1. The frequency 1 after adjustment falls within a frequency range required for the main processor to access the internal memory.

In an implementation, after the internal memory is initialized, a self-refresh area of the internal memory is changed to an entire area of the internal memory, which may be understood as that in this case, the self-refresh area of the internal memory changes from the entire area of the second area or a part of the second area to the entire area of the internal memory (including the first area and the third area).

S205: The main processor obtains the first data from the second area in the internal memory based on the third event.

In an implementation, after being powered on, the main processor may directly obtain the first data from the second area in the internal memory based on the storage location of the first data.

S206: The main processor loads and initializes a system based on the first data.

In an implementation, the main processor may directly restore loading of service data of a multi-layer software and hardware architecture based on the first data, to directly complete initialization of the main processor.

In an implementation, after S206, the operating mode of the electronic device 100 is switched to the working mode, and both the main processor and the coprocessor in the electronic device 100 work. In this case, the electronic device 100 may display the user interface 260 shown in (F) in FIG. 2.

Apart from the implementation shown in FIG. 7, in another implementation, in S202, when the coprocessor detects that the first data is incomplete (for example, the first data is not included), the coprocessor may send a fourth event to the main processor. Then, the main processor may be powered on based on the fourth event, and perform a second initialization procedure. The second initialization procedure includes, for example, obtaining related data from an external memory, and sequentially loading related data of each layer based on the multi-layer software and hardware architecture (for example, including but not limited to a kernel layer, a system library, an application framework layer, and an application layer) of the system, and completing initialization of the main processor when loading of all the data is completed.

Apart from the case in which the coprocessor detects the first data shown in FIG. 7, in another implementation, S202 may not be included, but the coprocessor sends a fifth event to the main processor based on the second event, where the fifth event may indicate to switch the operating mode to the working mode. Then, the main processor may be powered on based on the fifth event, and detect whether the internal memory stores the data. When detecting that the internal memory stores the first data, the main processor may obtain the first data, and load and initialize the system based on the first data. When detecting that the internal memory does not store the data, the main processor may perform the second initialization procedure.

In the method shown in FIG. 7, when the electronic device is in the power saving mode, the electronic device may receive the second user operation. The second user operation may be used to switch the operating mode from the power saving mode to the working mode. In response to the second user operation, the electronic device may control the main processor to be powered on, and obtain the first data from the internal memory. The electronic device may perform the first initialization procedure (that is, load the first data and initialize the main processor) based on the first data, so that the electronic device is switched to the working mode. The first data is service data (including data of a running service, a cached process, and the like) of the main processor stored when the electronic device is switched from the working mode to the power saving mode, and the first data includes the service data of the multi-layer software and hardware architecture of the system. When the electronic device is switched from the power saving mode to the working mode, the electronic device may directly complete initialization of the main processor based on content and the storage location of the first data without obtaining the related data from the external memory and sequentially loading the related data of each layer in the multi-layer software and hardware architecture, which may be understood as that the electronic device uses the first data to complete loading of the service data of the multi-layer software and hardware architecture at a time. Duration (usually less than 5 seconds) of the first initialization procedure is less than duration (usually 70 seconds) of a second initialization procedure. In this way, a problem of a relatively long time required for operating mode switching is resolved, a waiting time and an anxiety of a user are reduced, and user experience is improved.

The following describes, with reference to a diagram of two types of area distribution of an internal memory shown in FIG. 8, a specific implementation process of the electronic device 100 in a mode switching scenario by using examples.

As shown in (A) in FIG. 8 and (B) in FIG. 8, the internal memory may be divided into a plurality of areas, and the plurality of areas may include a first area and a third area. The first area is an area in which a main processor stores data, and the third area is an area in which a coprocessor stores data. In a working mode, both the main processor and the coprocessor may access the internal memory. For example, the main processor may access the first area of the internal memory, and the coprocessor may access the third area of the internal memory. In a power saving mode, the main processor does not work and cannot access the internal memory, and the coprocessor may access the first area and the third area of the internal memory.

In an implementation, when determining that an operating mode currently needs to be switched from the working mode to the power saving mode, the electronic device 100 may normalize and store service data of the main processor in a second area in the first area, and the second area is a part of the first area. Refer to (A) in FIG. 8. Subsequently, the electronic device 100 may set a self-refresh area of the internal memory based on the second area, so that the self-refresh area in the internal memory is periodically refreshed, and an area other than the self-refresh area is not refreshed. For example, the second area is directly set as the self-refresh area, and an area other than the second area in the third area and the first area is not refreshed, so that power consumption of the electronic device is reduced. Then, when determining that the operating mode currently needs to be switched from the power saving mode back to the working mode, the electronic device 100 may directly obtain first data from the second area, to avoid selecting the first data from the first area again, so that a time for obtaining the first data is reduced, a time for a user to wait for mode switching is reduced, and user experience is improved.

In another implementation, when determining that the operating mode currently needs to be switched from the working mode to the power saving mode, the electronic device 100 may directly store the service data of the main processor in the first area. Refer to (B) in FIG. 8. A process in which the main processor performs normalization and storage is not required according to the manner, and the manner is applicable to a main processor with average/poor computational power, so that an application scenario of mode switching is expanded. Subsequently, the electronic device 100 may set the self-refresh area of the internal memory based on the first area. For example, the first area is directly set as the self-refresh area, and the third area is not refreshed. This manner is different from the foregoing manner in which the second area is set as the self-refresh area in that a range of the self-refresh area is larger, and therefore power consumption is increased. Then, when determining that the operating mode currently needs to be switched from the power saving mode back to the working mode, the electronic device 100 may obtain the first data from the first area, and initialize the main processor based on the first data.

FIG. 9 is a schematic flowchart of still another mode switching method according to an embodiment of this application. The method may be applied to the mode switching scenarios shown in FIG. 1 and FIG. 2. The method may be applied to the electronic device 100 shown in FIG. 3. The method may be applied to the electronic device 100 shown in FIG. 4. The method may be applied to the electronic device 100 shown in FIG. 5. The method may include but is not limited to the following steps.

S301: An electronic device receives a first operation.

In an implementation, a current operating mode of the electronic device is a power saving mode, a main processor in the electronic device does not work, and only a coprocessor works. In an implementation, when the operating mode of the electronic device is the power saving mode, an operating frequency of an internal memory is a first frequency. For description of the first frequency, refer to the descriptions of the frequency 2 in S201 in FIG. 7. Details are not described herein again.

In an implementation, the first operation may be used to switch the operating mode of the electronic device from the power saving mode to a working mode. The electronic device may receive the first operation, and determine, in response to the first operation, that there is currently a need to switch to the working mode. For specific description, refer to the descriptions of receiving the second user operation by the electronic device 100 in S201 in FIG. 7. Details are not described herein again.

In an implementation, before S301, the electronic device may receive a second operation, store first data in the internal memory, and control the main processor to be powered off. The second operation may be used to switch the operating mode of the electronic device from the working mode to the power saving mode. For specific description, refer to the descriptions of S101 to S106 in FIG. 6. Details are not described herein again.

In an implementation, the electronic device may obtain the first data from a first area in the internal memory, and store the first data in a second area in the internal memory. For specific description, refer to the descriptions of S104 in FIG. 6. The first area is used for the main processor to store data. The second area is different from the first area. The second area may be a part of the first area. For description of the first area, refer to the descriptions of the first area in S103 in FIG. 6. For description of the second area, refer to the descriptions of the second area in S104 in FIG. 6. Details are not described herein again.

In an implementation, a third area in the internal memory is used for the coprocessor to store data. For description of the third area, refer to the descriptions of the third area in S103 in FIG. 6. Details are not described herein again.

In an implementation, after the electronic device stores the first data in the internal memory, the main processor may send a first message to the coprocessor, and the first message may include storage location information of the first data. For specific description, refer to the descriptions of S105 in FIG. 6. The storage location information of the first data may be used to determine a refresh area of the internal memory during the power saving mode. For specific description, refer to the descriptions of S109 in FIG. 6. Details are not described herein again.

In an implementation, the storage location information of the first data may include location information of the second area, or location information of the first data stored in the second area. The location information of the second area may be fixed address information, or may be variable address information. The location information of the first data stored in the second area may be address information corresponding to a part of the second area. For specific description, refer to the descriptions of S104 in FIG. 6. Details are not described herein again.

In an implementation, the first message may include size information of the first data, and the size information of the first data may be determined based on a specific location at which the first data is stored in the second area. For specific description, refer to the descriptions of S104 in FIG. 6. Details are not described herein again.

In an implementation, after controlling the main processor to be powered off, the electronic device may adjust the operating frequency of the internal memory to the first frequency, where the first frequency is less than a second frequency, and the second frequency is an operating frequency of the internal memory during the working mode. For description of the second frequency, refer to the descriptions of the frequency 1 in S101 in FIG. 6. For specific description, refer to the descriptions of S108 in FIG. 6. Details are not described herein again.

S302: The electronic device controls the main processor to be powered on.

In an implementation, when receiving the first operation, the electronic device may control the main processor, an external device, and a chip SOC to be powered on.

In an implementation, after being powered on, the main processor may initialize the internal memory, and adjust the operating frequency of the internal memory to the second frequency. For description of the second frequency, refer to the descriptions of the frequency 1 in S204 in FIG. 7. Details are not described herein again.

S303: The electronic device obtains the first data from the internal memory.

In an implementation, the first data is service data of the main processor stored when the operating mode of the electronic device is switched from the working mode to the power saving mode.

In an implementation, for description of S303, refer to the descriptions of S205 in FIG. 7. Details are not described herein again.

In an implementation, after S303, the electronic device may perform a first initialization procedure on the main processor based on the first data. For specific description, refer to the descriptions of S206 in FIG. 7. Details are not described herein again.

In an implementation, if the internal memory does not store the first data, the electronic device may perform a second initialization procedure. The second initialization procedure includes, for example, obtaining related data from an external memory, and sequentially loading related data based on a multi-layer software and hardware architecture (for example, including but not limited to a kernel layer, a system library, an application framework layer, and an application layer) of a system, and initializing the main processor. Duration of the second initialization procedure is greater than duration of the first initialization procedure.

The foregoing embodiment is described by using an example in which the operating mode of the electronic device 100 is manually switched. In some other embodiments, the electronic device 100 may alternatively automatically switch the operating mode.

All or some of the methods provided in embodiments of this application may be implemented by software, hardware, firmware, or any combination thereof. When software is used to implement embodiments, all or some of embodiments may be implemented in a form of a computer program product. The computer program product includes one or more computer instructions. When the computer program instructions are loaded and performed on the computer, all or some of procedures or functions according to embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave). The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DWD)), a semiconductor medium (for example, a solid state disk (solid state disk, SSD)), or the like. The foregoing embodiments are merely intended for describing the technical solutions of this application, but not for limiting this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A mode switching method, applied to an electronic device, wherein the electronic device comprises a main processor, a coprocessor, and an internal memory; an operating mode of the electronic device comprises a power saving mode and a working mode; in the power saving mode, the coprocessor works, and the main processor does not work; in the working mode, the main processor and the coprocessor work; and the method comprises:
receiving a first operation, wherein the first operation is used to switch the operating mode of the electronic device from the power saving mode to the working mode;
controlling the main processor to be powered on; and
obtaining first data from the internal memory, wherein the first data is service data of the main processor stored when the operating mode of the electronic device is switched from the working mode to the power saving mode.

2. The method according to claim 1, wherein after obtaining the first data from the internal memory, the method further comprises:
performing a first initialization procedure on the main processor based on the first data.

3. The method according to claim 1 or 2, wherein before receiving the first operation, the method further comprises:
receiving a second operation, wherein the second operation is used to switch the operating mode of the electronic device from the working mode to the power saving mode;
storing the first data in the internal memory; and
controlling the main processor to be powered off.

4. The method according to claim 3, wherein storing the first data in the internal memory comprises:
obtaining the first data from a first area in the internal memory, wherein the first area is used for the main processor to store data; and
storing the first data in a second area in the internal memory, wherein the second area is different from the first area.

5. The method according to any one of claims 1 to 4, wherein a third area in the internal memory is used for the coprocessor to store data.

6. The method according to claim 3, wherein after storing the first data in the internal memory, the method further comprises:
sending, by the main processor, a first message to the coprocessor, wherein the first message comprises storage location information of the first data, and the storage location information of the first data is used to determine a refresh area of the internal memory during the power saving mode.

7. The method according to claim 6, wherein the storage location information of the first data comprises location information of the second area, or location information of the first data stored in the second area.

8. The method according to claim 6 or 7, wherein the first message comprises size information of the first data.

9. The method according to any one of claims 3 to 8, wherein after controlling the main processor to be powered off, the method further comprises:
adjusting an operating frequency of the internal memory to a first frequency, wherein the first frequency is less than a second frequency, and the second frequency is an operating frequency of the internal memory during the working mode.

10. The method according to any one of claims 2 to 9, wherein the method further comprises:
if the first data is not stored in the internal memory, performing a second initialization procedure, wherein duration of the second initialization procedure is greater than duration of the first initialization procedure.

11. An electronic device, comprising a transceiver, a processor, and a memory, wherein the memory is configured to store a computer program, and the processor invokes the computer program to perform the method according to any one of claims 1 to 10.

12. A computer storage medium, wherein the computer storage medium stores a computer program, and when the computer program is executed by a processor, the method according to any one of claims 1 to 10 is implemented.
